# EUROPÄISCHE PATENTANMELDUNG

(11) **EP 4 656 520 A1**
(43) Veröffentlichungstag der Anmeldung: **03.12.2025**
(21) Anmeldenummer: 25179432.7
(22) Anmeldetag: 28.05.2025
(51) Int. Cl.: B64D 15/20, G06N 3/00, G06T 1/00

(54) **VERFAHREN ZUR DETEKTION EINER LUFTFAHRZEUGVEREISUNG SOWIE VORRICHTUNG UND LUFTFAHRZEUG HIERZU**

(30) Priorität: 29.05.2024 DE 102024115037
(71) Anmelder: Deutsches Zentrum für Luft- und Raumfahrt e.V., 53227 Bonn-Oberkassel (DE)
(72) Erfinder: Kilian, Daniel, 38678 Clausthal-Zellerfeld (DE); Goetz, Marie, 38104 Braunschweig (DE); Deiler, Dr. Christoph, 38106 Braunschweig (DE); Durak, Prof. Dr. Umut, 38108 Braunschweig (DE)
(74) Vertreter: Gramm, Lins & Partner Patent- und Rechtsanwälte PartGmbB

(57) **Zusammenfassung**

Die Erfindung betrifft ein Verfahren zur Detektion einer Luftfahrzeugvereisung eines Luftfahrzeuges, wobei das Verfahren die folgenden Schritte umfasst:
- Aufnehmen von zumindest einem Teil einer äußeren Strömungsoberfläche des Luftfahrzeuges mittels mindestens eines optischen Bildsensors einer Detektionsvorrichtung und Generieren von digitalen Bilddaten, welche den aufgenommenen Teil der äußeren Strömungsoberfläche des Luftfahrzeuges enthalten,
- Eingeben der digitalen Bilddaten in ein maschinelles Lernsystem der Detektionsvorrichtung als Eingabedaten, welches mittels mindestens eines maschinell angelernten Entscheidungsalgorithmus eine Korrelation zwischen digitalen Bilddaten als Eingabedaten und verschiedenen Vereisungsarten einer Luftfahrzeugvereisung als Ausgabedaten gelernt hat, um Ausgabedaten zu erhalten, und
- Detektieren einer Luftfahrzeugvereisung in Abhängigkeit von den erhaltenen Ausgabedaten und, sofern eine Luftfahrzeugvereisung detektiert wurde, Klassifizieren der Luftfahrzeugvereisung hinsichtlich mindestens einer Vereisungsart in Abhängigkeit von den erhaltenen Ausgabedaten.

## Beschreibung

Die Erfindung betrifft ein Verfahren zur Detektion einer Luftfahrzeugvereisung eines Luftfahrzeuges, insbesondere während des Flugbetriebs. Die Erfindung betrifft ebenso eine Detektionsvorrichtung sowie ein Luftfahrzeug hierzu.

Luftfahrzeuge weisen aerodynamische Flächen auf, die von der umströmenden Luft mit einer Geschwindigkeit angeströmt werden und hierbei eine Auftriebskraft erzeugen, die es dem Luftfahrzeug erlauben, innerhalb der atmosphärischen Luftmassen zu fliegen. Solche aerodynamischen Flächen können jedoch je nach Flugsituation anfällig für Vereisung sein, wodurch sich an der äußeren, von den umgebenden Luftmassen umströmte Strömungsoberfläche eine Eisschicht (partiell oder vollständig) bildet, welche die aerodynamischen Eigenschaften der aerodynamischen Fläche verändern und sich somit negativ auf den Gesamtflugzustand auswirken können. Aber auch Vereisungen am Rumpf oder anderen Flächen, die nicht hauptsächlich zum Erzeugen einer Auftriebskraft notwendig sind, können sich negativ auf die Flugeigenschaften des Luftfahrzeuges auswirken, was gerade in der Start- und Landephase schnell zu kritischen Situationen führen kann.

Luftfahrzeugvereisungen, d.h. das partielle oder vollständige Bilden von Eis an den äußeren Strömungsoberflächen eines Luftfahrzeuges, insbesondere während des Fluges, zu detektieren, ist dabei nicht ohne weiteres trivial. Eine manuelle Überprüfung der aerodynamischen Flächen z.B. auf Vereisung ist dabei im Flug schon deshalb nicht möglich, da ein Zugang zu den aerodynamischen Flächen des Fluges durch das Bordpersonal ausgeschlossen ist. Anderweitige Systeme, die auf einer sensorischen Detektion einer Vereisung beruhen, weisen bisweilen einen hohen Grad an Komplexität und technische Anfälligkeit auf, was nicht zuletzt zu einer hohen Fehlalarmquote und somit geringe Akzeptanz durch die Piloten führt.

Aus der US 6,253,126 B1 ist ein Verfahren und eine Vorrichtung zur Flugüberwachung bekannt, wobei an dem Luftfahrzeug, insbesondere an den Flügeln des Luftfahrzeugs, eine Reihe von zusätzlichen Luftdrucksonden angeordnet werden, um aus einer möglichst lückenlosen Überwachung des Flügelprofildruckverlaufes auf wichtige Flugparameter zu schließen. Mit Hilfe dieser Sensoren soll es darüber hinaus auch möglich sein, einen Vereisungszustand detektieren zu können.

Nachteilig hierbei ist jedoch, dass kein ganzheitliches Konzept vorgesehen ist, sodass eine z.B. Vereisungsdetektion zwischen den Sensoren nicht erkannt oder nur eine partielle Vereisung an einem der Sensoren als eine Vereisung detektiert wird. Im ersteren Fall wird eine Vereisung nicht erkannt, was sich insgesamt negativ auf die Flugeigenschaften auswirken kann und dadurch das potenzielle Unfallrisiko erhöht. Im zweiten Fall wird zwar eine Vereisung detektiert, woraufhin unter Umständen Gegenmaßnahmen durch den Piloten ergriffen werden, obwohl die Vereisung keine sicherheitsrelevante Beeinträchtigung der Flugeigenschaften darstellt. In einem solchen Fall würden dann die ergriffenen Gegenmaßnahmen, wie beispielsweise Änderung des Flugweges, zu höheren Kosten und längeren Flugzeiten führen, obwohl hierfür keine Notwendigkeit bestand. Darüber hinaus ist das in der US 6,253,126 B1 vorgeschlagene Verfahren sehr aufwändig zu entwickeln, zu installieren und zu warten. Außerdem wäre eine solche Vorrichtung sehr schwer (Geräte, Stromversorgung, Datenkommunikation zur Recheneinheit, die die nicht triviale Auswertung durchführen sollen), welche mit sehr großer Wahrscheinlichkeit zu einem erhöhten Kraftstoffverbrauch führen würden.

Aus der US 8,692,361 B2 ist ein Verfahren zum Überwachen der Strömungsqualität bei aerodynamischen Flächen von Luftfahrzeugen bekannt, wobei die Haupteigenschaft der überwachten Strömung die Laminarität ist. Hierzu wird die die aerodynamische Fläche beheizt, sodass eine frühe Transition von der laminaren Umströmung in eine turbulente Umströmung erzwungen wird. Anhand von Widerstandsdaten, die bei der laminaren und bei der turbulenten Umströmung aufgezeichnet wurden, lässt sich nun eine Verschmutzung der aerodynamischen Oberfläche feststellen.

Nachteil hierbei ist, dass sowohl ein aufwändiges Heizsystem als auch ein komplexes Sensorsystem notwendig ist, um die entsprechend negativen Beeinflussungen auf die aerodynamische Fläche feststellen zu können. Eine die Luftfahrzeugeigenschaft beeinträchtigende Vereisung oder Verschmutzung der aerodynamischen Flächen lässt sich so nicht sicher feststellen, da dieses Verfahren nur eine auswertbare Messung der aerodynamischen Güte der Oberfläche zwischen einem "perfekt sauberen" Zustand und einem "leicht verschmutzten" bzw. "leicht vereisten" Zustand ermöglicht. Bei einer weiteren Degradierung der aerodynamischen Güte der Oberfläche kann kein Unterschied zu dem in der US 8,692,361 B2 beschriebenen Verfahren mehr festgestellt werden. Die Degradierung, die unter Umständen sicherheitskritisch werden könnte (z.B. bei starker Vereisung), liegt jenseits des Bereiches, wofür das beschriebene Verfahren genutzt werden kann.

Die US 6,304,194 B1 offenbart ein Verfahren und eine Vorrichtung zum Erkennen einer Vereisung eines Luftfahrzeuges im Flug, wobei hier Werte bezüglich der Flugleistung (aircraft performance) ermittelt werden. Dabei wird ein Sensormodell verwendet, welches die Sensorwerte im nicht-degradierten Zustand abbildet. Die aus dem Sensormodell stammenden Sensorwerte werden dann mit den gemessenen Sensorwerten verglichen.

Die US 2016/035203 A1 sowie US 2014/090456 A1 offenbaren jeweils die Vereisung eines Luftfahrzeuges basierend auf der Turbinenleistung.

Aus der DE 10 2016 111 902 A1 sowie der WO 2018 / 002 148 A1 ist ein Verfahren und eine Vorrichtung zur Detektion einer Luftfahrzeugvereisung eines im Flug befindlichen Luftfahrzeuges bekannt, wobei hier zunächst aktuelle Flugzustandsdaten des im Flug befindlichen Luftfahrzeuges ermittelt werden. Basierend darauf wird dann eine Flugleistungskennzahl berechnet, wobei dann mithilfe eines Flugleistungsmodells eine nominelle Flugleistungsreferenzkennzahl ermittelt und dann durch Vergleich beider Kennzahlen auf eine Luftfahrzeugvereisung durch Erkennen einer Flugleistungsdegradierung geschlossen wird. Nachteilig hierbei ist, dass eine Luftfahrzeugvereisung erst dann erkannt wird, wenn die Luftfahrzeugvereisung bereits zu einer Flugleistungsdegradierung geführt hat.

Aus CN114596315 A, CN112966692 A sowie CN 114372960 A sind optische Detektionsverfahrens bekannt, bei denen mithilfe einer Kamera die aerodynamischen Profilflächen der Luftfahrzeuge aufgenommen und diese so aufgenommenen Bilddaten dann in ein KI-System eingespeist werden, dass eine entsprechende Luftfahrzeugvereisung aus dem Bilddaten gelernt hat.

Es ist daher Aufgabe der vorliegenden Erfindung ein verbessertes Verfahren sowie eine verbesserte Vorrichtung zum Erkennen einer Luftfahrzeugvereisung, insbesondere eines im Flug befindlichen Luftfahrzeuges anzugeben.

Die Aufgabe wird mit dem Verfahren gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein Verfahren zur Detektion einer Luftfahrzeugvereisung eines Luftfahrzeuges vorgeschlagen, wobei das Verfahren erfindungsgemäß die folgenden Schritte umfasst:
- Aufnehmen von zumindest einem Teil einer äußeren Strömungsoberfläche des Luftfahrzeuges mittels mindestens eines optischen Bildsensors einer Detektionsvorrichtung und Generieren von digitalen Bilddaten, welche den aufgenommenen Teil der äußeren Strömungsoberfläche des Luftfahrzeugs enthalten,
- Eingeben der digitalen Bilddaten in ein maschinelles Lernsystem der Detektionsvorrichtung als Eingabedaten, welches mittels mindestens eines maschinell angelernten Entscheidungsalgorithmus eine Korrelation zwischen digitalen Bilddaten als Eingabedaten und verschiedenen Vereisungsarten einer Luftfahrzeugvereisung als Ausgabedaten gelernt hat, um Ausgabedaten zu erhalten, und
- Detektieren einer Luftfahrzeugvereisung in Abhängigkeit von den erhaltenen Ausgabedaten und, sofern eine Luftfahrzeugvereisung detektiert wurde, Klassifizieren der Luftfahrzeugvereisung hinsichtlich mindestens einer Vereisungsart in Abhängigkeit von den erhaltenen Ausgabedaten.

Alle Flächen, die einer äußeren Umgebungsluft zugewandt sind und/oder die von einer äußeren Umgebungsluft des Luftfahrzeugs umströmt werden, werden im Sinne der vorliegenden Erfindung als äußere Strömungsoberflächen bezeichnet.

Unter einem Luftfahrzeug im Sinne der vorliegenden Erfindung werden bemannte Luftfahrzeuge als auch unbemannte Luftfahrzeuge (Drohnen) verstanden. Dabei umfasst der Begriff Luftfahrzeug sowohl Starrflügler (Flugzeuge im Allgemeinen, insbesondere Verkehrsflugzeuge als Massentransportmittel sowie Transportflugzeuge; aber auch Sportflugzeuge und Jets) als auch Drehflügler, insbesondere Hubschrauber.

Demnach ist erfindungsgemäß vorgesehen, dass ein maschinelles Lernsystem bereitgestellt wird, welches mindestens einen maschinell angelernten Entscheidungsalgorithmus umfasst. Dies kann beispielsweise eine künstliches neuronales Netz sein. Der mindestens eine maschinell angelernten Entscheidungsalgorithmus hat dabei zumindest eine Korrelation zwischen digitalen Bilddaten als Eingabedaten und verschiedenen Vereisungsarten einer Luftfahrzeugvereisung als Ausgabedaten gelernt. Diese digitalen Bilddaten, die als Eingabedaten in den Entscheidungsalgorithmus eingegeben werden, umfassen dabei Aufnahmen der äußeren Strömungsoberfläche eines Luftfahrzeugs, beispielsweise die Flügelvorderkante von Tragflächen. Dabei wurde der Entscheidungsalgorithmus dahingehend angelernt, dass nicht nur eine Luftfahrzeugvereisung aus den digitalen Bilddaten detektiert werden kann, sondern auch, um welche Vereisungsart es sich bei der Luftfahrzeugvereisung handelt. Demnach wird die detektierte Luftfahrzeugvereisung hinsichtlich einer Vereisungsart durch den maschinell angelernten Entscheidungsalgorithmus klassifiziert.

Insbesondere im Flugbetrieb, aber auch am Boden, werden mithilfe mindestens eines optischen Bildsensors die gewünschte äußere Strömungsoberfläche aufgenommen. Dabei können mehrere optische Bildsensoren vorgesehen sein, die jeweils Teilbereiche einer äußeren Strömungsoberfläche erkennen. Ein optischer Bildsensor erfasst dabei demnach zumindest einen Teilbereich einer äußeren Strömungsoberfläche des Luftfahrzeugs, beispielsweise ein Teil der Flügelvorderkante eines Flügels, und generiert aus den Aufnahmen dann digitalen Bilddaten, die dann dem maschinellen Lernsystem zugeführt werden. Die Aufnahme durch den optischen Bildsensors und das Generieren der digitalen Bilddaten erfolgt habe kontinuierlich, sodass in zeitdiskreten Abständen jeweils eine digitale Abbildung des aufgenommenen Teilbereichs der äußeren Strömungsoberfläche erzeugt wird. So ist es denkbar, dass beispielsweise in Abständen von 1 Sekunde jeweils ein digitales Bild erzeugt wird, dass dann dem maschinellen Lernsystem zugeführt wird.

Das maschinelle Lernsystem stellt diese digitalen Bilddaten, die zumindest eine einzelne Abbildung des aufgenommenen Teilbereiches umfassen und vorteilhafterweise auch mehrere Abbildungen, die zeitlich nacheinander aufgenommen wurden, enthalten können, dem maschinell angelernten Entscheidungsalgorithmus als Eingabedaten bereit, woraufhin der Entscheidungsalgorithmus entsprechende Ausgabedaten liefert.

Diese Ausgabedaten enthalten dabei nicht nur eine Information darüber, ob in den digitalen Bilddaten der Eingabedaten eine Luftfahrzeugvereisung festgestellt werden kann, sondern auch die Vereisungsart. Aus den Ausgabedaten können nur nun direkt oder indirekt sowohl die Feststellung einer Luftfahrzeugvereisung als auch die Vereisungsart abgeleitet werden und dem Piloten oder anderen Überwachungsorgane präsentiert werden, sodass entsprechende Gegenmaßnahmen eingeleitet werden können.

Mithilfe der vorliegenden Erfindung wird es somit möglich, ohne das Einbauen von Sensoren in die äußere Strömungsoberfläche eine Luftfahrzeugvereisung sowie eine Klassifizierung der Vereisungsart zu ermitteln, und zwar unabhängig von dem jeweiligen Luftfahrzeug. Dadurch lassen sich aktuelle Bauvorschriften für neue Luftfahrzeuge einhalten, welche die präzise Erkennung eine Eisablagerung fordern. Außerdem lassen sich die Wartungskosten sowie die Anschaffungskosten für eine solche Detektionsvorrichtung deutlich reduzieren, da bis auf optische Sensoren und eine digitale Recheneinheit, auf der das maschinelle Lernsystem ausgeführt wird, grundsätzlich keine weitere Hardware notwendig ist.

Dabei kann es vorgesehen sein, dass jede aufgenommene Abbildung separaten unabhängig von den zuvor aufgenommenen Bilddaten in den Entscheidungsalgorithmus eingegeben wird, sodass für jede aufgenommene Abbildung eine eigene Entscheidung unabhängig von den Abbildungen zuvor getroffen wird.

Es ist allerdings auch vom Erfindungsgedanken umfasst, dass eine oder mehrere zuvor getroffenen Entscheidungen des Entscheidungsalgorithmus als zusätzliche Eingabedaten für die aktuelle Abbildung genutzt werden, sodass auch ein zeitlicher Verlauf der Entscheidungen des maschinellen Lernsystems abgebildet wird. Die Ergebnisse der letzten x-Abbildungen fließt somit in die Ergebnisberechnung der aktuellsten Abbildung (x+1) mit ein und wird mit evaluiert. Dadurch entsteht eine höhere Genauigkeit und weniger "False Positive" Entscheidungen. Dabei können beispielsweise pro Abbildung auch die letzten 15 Sekunden mit betrachtet werden, wobei die Anzahl der betrachteten x-Abbildungen auch in Abhängigkeit der Wahrscheinlichkeiten der Klassifizierungen variiert werden kann.

Es werden demnach in dieser Ausführungsform die Ausgabedaten und/oder davon abgeleiteten Informationen vorheriger Iterationsschritte als Eingabedaten im nachfolgenden Iterationsschritt in den mindestens einen maschinell angelernten Entscheidungsalgorithmus zusätzlich mit eingegeben. Solche Ausgabedaten bzw. davon abgeleiteten Informationen können darüber hinaus grundsätzlich nicht nur die Klassifizierung an sich betreffen, sondern auch eine Wahrscheinlichkeit, mit der diese Klassifizierung von dem Entscheidungsalgorithmus getroffen wurde.

Gemäß einer Ausführungsform ist vorgesehen, dass die Vereisungsarten Klareis, Raufreifeis, Mischeis, Tröpfcheneis (SLD-Eis), Rücklaufeis und/oder Zwischenzykluseis sind. Bei Tröpfcheneis handelt es sich um Eis gebildet durch große unterkühlte Tropfen.

Zum Lernen des Entscheidungsalgorithmus werden verschiedene Abbildungen dieser Vereisungsarten sowie Abbildungen unvereister Oberflächen genutzt, um dem Entscheidungsalgorithmus die Klassifizierung maschinell zu trainieren.

Gemäß einer Ausführungsform ist vorgesehen, dass das Verfahren wie folgt weitergebildet wird:
- Aufnehmen von zumindest dem Teil der äußeren Strömungsoberfläche des Luftfahrzeuges mittels mindestens des optischen Bildsensors der Detektionsvorrichtung mehrfach und zeitlich nacheinander und Generieren von mehreren, zeitlich nacheinander liegenden digitalen Bilddaten, welche einen zeitlichen Verlauf des aufgenommenen Teils der äußeren Strömungsoberfläche des Luftfahrzeugs enthalten,
- Eingeben der mehreren, zeitlich nacheinander liegenden digitalen Bilddaten in das maschinelle Lernsystem der Detektionsvorrichtung als Eingabedaten, welches mittels mindestens eines maschinell angelernten Entscheidungsalgorithmus eine Korrelation zwischen mehreren, zeitlich nacheinander liegenden digitalen Bilddaten als Eingabedaten und verschiedenen Änderungszuständen einer Luftfahrzeugvereisung als Ausgabedaten gelernt hat, um Ausgabedaten zu erhalten,
- Detektieren eines zeitlichen Verlaufes der Änderung der Luftfahrzeugvereisung in Abhängigkeit von den erhaltenen Ausgabedaten.

Demnach ist erfindungsgemäß vorgesehen, dass ein maschinelles Lernsystem mit einem maschinell angelernten Entscheidungsalgorithmus bereitgestellt wird, der eine Korrelation zwischen mehreren, zeitlich nacheinander liegenden digitalen Bilddaten als Eingabedaten und verschiedenen Änderungszuständen einer Luftfahrzeugvereisung als Ausgabedaten gelernt hat. Solche Änderungszustände können beispielsweise eine flächenmäßige Zunahme der Vereisung, eine flächenmäßige Abnahme der Vereisung und/oder eine flächenmäßige Unveränderung der Vereisung sein. Die mehreren digitalen Bilddaten, die zeitlich nacheinander aufgenommen und generiert wurden, zeigen somit den aufgenommenen Teil der äußeren Strömungsoberfläche über einen gewissen Zeitraum aus der Vergangenheit hinweg und enthalten somit einen Verlauf der Änderung der Luftfahrzeugvereisung.

Dabei ist es denkbar, dass zum Erhalt der Ausgabedaten jedes Mal die Mehrzahl der zeitlich nacheinander liegenden digitalen Bilddaten als Eingabedaten dem Entscheidungsalgorithmus bereitgestellt werden, sodass hierfür eine gewisse Anzahl der aufgenommenen digitalen Bilddaten aus der Vergangenheit zwischengespeichert werden. Denkbar ist aber auch, dass der Entscheidungsalgorithmus selbst den Vereisungszustand aus der Vergangenheit zwischenspeichert und beim Eingeben aktueller digitaler Bilddaten dann aufgrund der Zwischenspeicherung der vorhergehenden Vereisungszustände auf eine Veränderung schließt, sodass ein Verlauf der Vereisung detektiert werden kann.

Bei diesem Entscheidungsalgorithmus kann es sich um denselben Entscheidungsalgorithmus gemäß Anspruch 1 handeln. Denkbar ist aber auch, dass es sich um einen zusätzlichen, weiteren Entscheidungsalgorithmus handelt, der zusätzlich zu dem ersten Entscheidungsalgorithmus gemäß Anspruch 1 ein Ergebnis liefert. Die Ergebnisse aus beiden Entscheidungsalgorithmen können dann beispielsweise mithilfe einer weiteren KI, beispielsweise einer Support-Vector-Machnine (SVM bzw. SVN - Support-Vector-Network), verarbeitet werden, um ein entsprechendes Endergebnis zu erhalten.

Gemäß einer Ausführungsform ist vorgesehen, dass die digitalen Bilddaten in das maschinelles Lernsystem der Detektionsvorrichtung als Eingabedaten eingegeben werden, wobei mittels mindestens eines maschinell angelernten Entscheidungsalgorithmus eine Korrelation zwischen digitalen Bilddaten als Eingabedaten und einer Vereisungsfläche der Luftfahrzeugvereisung gelernt hat, wobei ein Maß für die Vereisungsfläche der Luftfahrzeugvereisung in Abhängigkeit von den erhaltenen Ausgabedaten ermittelt wird.

Auch hierbei kann es sich um denselben Entscheidungsalgorithmus gemäß Anspruch 1 handeln. Denkbar ist aber auch, dass es sich um einen zusätzlichen, weiteren Entscheidungsalgorithmus handelt, der zusätzlich zu dem ersten Entscheidungsalgorithmus gemäß Anspruch 1 ein Ergebnis liefert. Die Ergebnisse aus allen Entscheidungsalgorithmen können dann beispielsweise mithilfe einer weiteren KI, beispielsweise einer Support-Vector-Machnine (SVM bzw. SVN - Support-Vector-Network), verarbeitet werden, um ein entsprechendes Endergebnis zu erhalten.

Gemäß dieser Ausführungsform kann durch Bereitstellen der digitalen Bilddaten als Eingabedaten in den Entscheidungsalgorithmus ein Maß für die Vereisungsfläche der Luftfahrzeugvereisung ermittelt werden, umso die vereiste Fläche zu ermitteln. Das Maß für die Vereisungsfläche kann dabei prozentual oder in einer alternativen Skala angegeben werden.

Gemäß einer Ausführungsform ist vorgesehen, dass die digitalen Bilddaten in das maschinelles Lernsystem der Detektionsvorrichtung als Eingabedaten eingegeben werden, wobei mittels mindestens eines maschinell angelernten Entscheidungsalgorithmus eine Korrelation zwischen digitalen Bilddaten als Eingabedaten und Enteisungsmaßnahmen an einer äußeren Strömungsoberfläche eines Luftfahrzeugs gelernt hat, wobei in Abhängigkeit von den erhaltenen Ausgabedaten bestimmt wird, ob Enteisungsmaßnahmen durchgeführt werden/wurden oder nicht.

Hierdurch kann bestimmt werden, ob Enteisungsmaßnahmen durchgeführt werden/wurden oder nicht. Wurde eine Luftfahrzeugvereisung detektiert und hat der Pilot oder ein automatisches System entsprechende Enteisungsmaßnahmen vorgenommen, so kann dies durch das vorliegende Verfahren detektiert werden. Wird darüber hinaus auch, wie vorstehend bereits in einer Ausführungsform beschrieben, der zeitliche Änderungsverlauf der Vereisung ermittelt, so kann in diesem Zusammenhang festgestellt werden, ob die durchgeführten Enteisungsmaßnahmen zu dem gewünschten Erfolg (Verringerung der Enteisungsfläche) geführt haben oder nicht.

Der optische Bildsensor ist in dieser Ausführungsform so auf die äußere Strömungsoberfläche gerichtet, dass er die Enteisungsmaßnahmen, die sichtbar an der äußeren Strömungsoberfläche bei Aktivierung erkennbar sind, aufnimmt und bei Aktivierung diese Enteisungsmaßnahmen auch in den Bilddaten enthalten sind. Solche Enteisungsmaßnahmen können bspw. "deflating boots" sein.

Auch hierbei kann es sich um denselben Entscheidungsalgorithmus gemäß Anspruch 1 handeln. Denkbar ist aber auch, dass es sich um einen zusätzlichen, weiteren Entscheidungsalgorithmus handelt, der zusätzlich zu dem ersten Entscheidungsalgorithmus gemäß Anspruch 1 ein Ergebnis liefert. Die Ergebnisse aus allen Entscheidungsalgorithmen können dann beispielsweise mithilfe einer weiteren KI, beispielsweise einer Support-Vector-Machnine (SVM bzw. SVN - Support-Vector-Network), verarbeitet werden, um ein entsprechendes Endergebnis zu erhalten.

Grundsätzlich können dabei die Ergebnisse des oder der Entscheidungsalgorithmen in einen Validierungsprozess einfließen, mit dem der betreffende trainierte Entscheidungsalgorithmus überprüft und währenddessen weiter trainiert wird.

Gemäß einer Ausführungsform ist vorgesehen, dass die aus dem Entscheidungsalgorithmus erhaltenen Ausgabedaten und/oder die daraus abgeleiteten Informationen auf einer Anzeigevorrichtung angezeigt werden.

Dies kann beispielsweise ein Display im Cockpit sein, um dem Piloten eine Vereisung und ggfs. die Vereisungsart anzuzeigen.

Die Aufgabe wird im Übrigen auch mit der Detektionsvorrichtung gemäß Anspruch 7 gelöst, die zur Durchführung des vorstehend beschriebenen Verfahrens eingerichtet ist. Die Detektionsvorrichtung weist hierfür mindestens einen bildgebenden Sensor auf, der mit einer Recheneinheit verbunden ist, auf der das maschinelle Lernsystem mit dem maschinell angelernten Entscheidungsalgorithmus ausgeführt wird.

Die Aufgabe wird des Weiteren auch mit einem Luftfahrzeug mit einer solchen Detektionsvorrichtung erfindungsgemäß gelöst.

Die Erfindung wird anhand der beigefügten Figuren beispielhaft erläutert. Es zeigt:
- Figur 1:: schematische Darstellung der Detektionsvorrichtung zur Durchführung des erfindungsgemäßen Verfahrens;
- Figur 2:: Darstellung eines Trainings des maschinell gelernte Entscheidungsalgorithmus im Zusammenhang mit der Durchführung der Entscheidungsfindung.

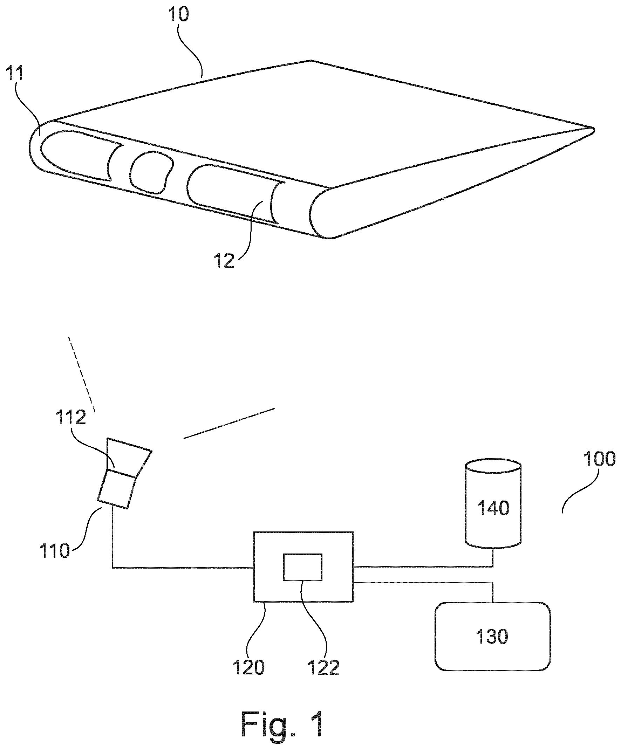

Figur 1 zeigt in einer schematisch stark vereinfachten Darstellung zunächst ein Flügel 10, der eine Flügelvorderkante 11 hat. An der Flügelvorderkante 11 hat sich im Flugbetrieb eine Vereisung 12 gebildet, die sich flächenmäßig stark über die Flügelvorderkante 11 ausgebreitet hat. Mit der vorliegenden Erfindung soll diese Luftfahrzeugvereisung 12 detektiert werden. Die in Figur 1 gezeigte Vereisung ist dabei nur beispielhaft auf die Flügelvorderkante gerichtet, wobei das vorliegende Verfahren unabhängig von der Position am Fluggerät eine Vereisung detektieren kann.

Am oder im Luftfahrzeug (nicht dargestellt) befindet sich eine Detektionsvorrichtung 100, die zumindest eine Kamera 110 mit mindestens einem digitalen Bildsensor 112 hat. Die Kamera 110 mit dem digitalen Bildsensor 112 ist dabei auf den Flügel 10, insbesondere auf die Flügelvorderkante 11 ausgerichtet und kann beispielsweise hinter einer Glasscheibe am Rumpf des Luftfahrzeuges angeordnet sein.

Der digitalen Bildsensor 112 nimmt nun die Flügelvorderkante 11 des Flügels 10 auf und generiert aus der Aufnahme digitalen Bilddaten, die dann an eine Recheneinheit 120 weitergeleitet werden. Auf der Recheneinheit 120 wird dabei ein maschinelles Lernsystem 122 mit einem maschinell angelernten Entscheidungsalgorithmus ausgeführt.

Dabei wird das maschinelle Lernsystem 122 derart bereitgestellt, dass es mit seinem angelernten Entscheidungsalgorithmus mindestens eine Korrelation zwischen digitalen Bilddaten als Eingabedaten und verschiedenen Vereisungsarten einer Luftfahrzeugvereisung als Ausgabedaten gelernt hat. Solche Vereisungsarten können dabei beispielsweise Klareis, Raufreifeis, Mischeis, Tröpfcheneis (SLD), Rücklaufeis und/oder Zwischenzykluseis sein.

Die von dem digitalen Bildsensor 112 stammenden digitalen Bilddaten werden nun als Eingabedaten dem maschinellen Lernsystem 122 bereitgestellt. Als Ausgabedaten wird dabei erhalten, ob eine Luftfahrzeugvereisung vorliegt und wenn ja, welche Vereisungsart aus den digitalen Bilddaten abgeleitet werden kann. Das Ergebnis dieser Ermittlung kann dann auf einem Display 130 angezeigt.

Dabei können die von dem digitalen Bildsensor 122 stammenden digitalen Bilddaten auch in ein digitalen Datenspeicher 140 zwischengespeichert werden, damit diese zu einem späteren Zeitpunkt ebenfalls in das maschinelle Lernsystem 122 als Eingabedaten eingegeben werden können, um so einen zeitlichen Verlauf der Luftfahrzeugvereisung zu erkennen. Dabei ist es denkbar, dass jeder Abbildung, die in den digitalen Datenspeicher 140 gespeichert ist, ob eine bereits zuvor detektierte Vereisungsart sowie ein ermitteltes Maß für die vereiste Fläche zugeordnet ist, sodass auch hierüber eine Veränderung der Luftfahrzeugvereisung detektiert werden kann.

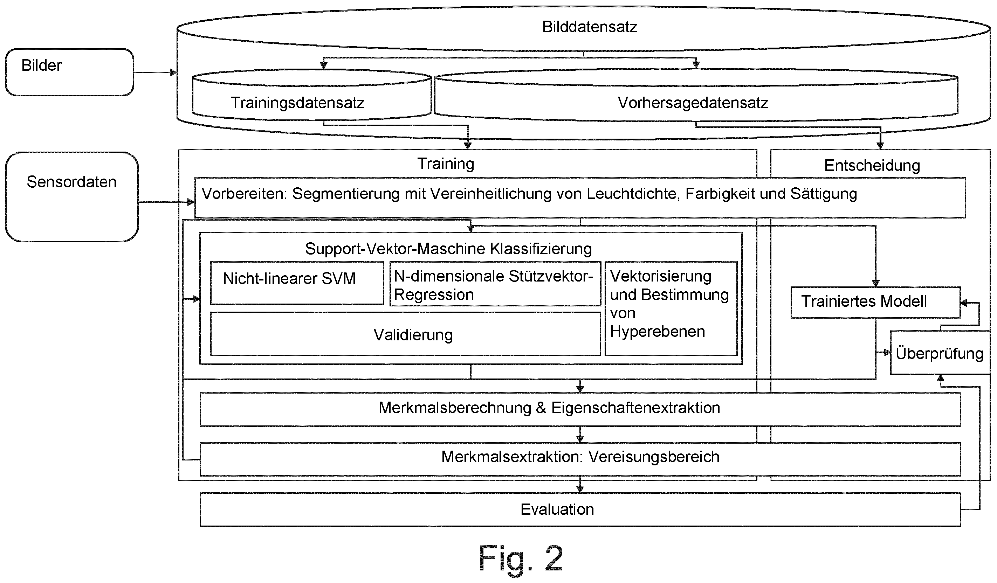

Figur 2 zeigt in einer Übersicht verschiedene Stufen, um sowohl den Entscheidungsalgorithmus zu trainieren als auch eine Klassifizierung der Vereisungsart durchzuführen. Dabei lassen sich grundsätzlich 3 verschiedene Phasen identifizieren: Eine erste Trainingsphase, eine zweite Testphase und eine dritte Evaluationsphase.

Die Testphase und die Evaluationsphase kann dabei sowohl bei der Erstellung des trainierten Entscheidungsalgorithmus als auch im Echtzeitbetrieb durchgeführt werden.

In der Testphase werden zu Beginn die Bilder nach Qualität und Inhalt qualifiziert. Abhängig von der Kameraposition ergeben sich andere Merkmale, die ausgewertet werden müssen. Dazu muss eine Datenaufbereitung, in Form einer Klassifikation, Skalierung, Größenänderung etc. durchgeführt werden. Insbesondere werden da Auflösung, Grauwert, Chromatizität, Farbenmerkmale und Valeur normalisiert.

Dabei können je nach Verfügbarkeit auch flugspezifische Informationen, wie aktuelle Wetterlage, Position, Höhe und Luftfeuchtigkeit herangezogen werden, die eine einheitlichere Darstellung ermöglichen. Dies gilt insbesondere auch für andere Sensoren. Diese Informationen sind nicht zwingend erforderlich, ermöglichen aber ein genaueres und besseres Training der Datensätze.

Störbehaftete Bilder sind hier bereits ausgeschlossen, da sie die benötigte Qualität/ Merkmale nicht erfüllen. Mittels Support Vector Machines-Klassifizierung wird dann eine n-dimensionale Hyperplane bestimmt, die eine Unterscheidung zwischen den einzelnen Objekten liefert. Im Falle das direkt keine Hyperplanes bestimmbar sind, da eine geringe Chromatizität gegeben ist, wird eine Unterscheidung mittels n-dimensionale Support-Vektor-Regressionen bestimmt.

Das daraus entstandene Modell wird nach einer optionalen Validierung im aktiven Flugbetrieb (Testphase) oder für eine flächendeckende Analyse (Evaluation) eingesetzt.

In der Testphase wird ein Bild in den Entscheidungsalgorithmus gegeben, klassifiziert nach seiner Qualität (Preporocessing) und anschließend verarbeitet. Dazu werden Normalisierungen der Auflösung, Grauwert, Chromatizität, Farbenmerkmale und Valeur durchgeführt, Das Postprocessing liefert mehrere Stufen, die die Vereisungsfläche bestimmt sowie ob etwaige Enteisungsmaßnahmen wie Deicing Boots aktiv sind.

Die Ergebnisse werden sequenziell gespeichert, wodurch eine ganzheitliche Analyse ermöglicht werden kann. Die Evaluation nutzt den zeitlichen Verlauf der Vereisung und kann, auch nur bei kurzen Schleifen, die Funktionalität von Enteisungsmechanismen, wie den Deicing Boots prüfen, sowie kurzfristige Prognosen liefern. Ein essenzieller Aspekt ist hier die Reduzierung der Fehler. Durch eine hohe Bildwiederholrate kann die Vereisungsänderung nicht schlagartig stattfinden. Die Betrachtung einer Bildersequenz (n vorherige Bilder, willkürliche Startbilder sowie große Zeitsprünge) verschärfen und stärken die Korrektheit der Hyperplanes, sodass etwaige Fehlinterpretierungen, wie unter anderem beim Auftreten von hohen Deltas nicht möglich sind.

Dabei kann nach erfolgreichem Training und Validierung die Methode unabhängig der weiteren Notwendigkeit zum Training auf andere Luftfahrzeuge übertragen werden, sodass schlussendlich nur die Testphase mit dem erzeugten Modell genutzt werden kann. Zur Sichererstellung der Ergebnisse wird daher der Output vorheriger Rechnungen auch als Inputmenge neuer Bildinterpretationen genutzt.

### Bezugszeichenliste

10 Flügel
11 Flügelvorderkante
12 Luftfahrzeugvereisung
100 Detektionsvorrichtung
110 Kamera
112 bildgebenden Sensor
120 Recheneinheit
122 maschinelles Lernsystem
130 Display
140 digitaler Datenspeicher

## Patentansprüche

1. Verfahren zur Detektion einer Luftfahrzeugvereisung (12) eines Luftfahrzeuges, wobei das Verfahren die folgenden Schritte umfasst:
- Aufnehmen von zumindest einem Teil einer äußeren Strömungsoberfläche des Luftfahrzeuges mittels mindestens eines optischen Bildsensors einer Detektionsvorrichtung (100) und Generieren von digitalen Bilddaten, welche den aufgenommenen Teil der äußeren Strömungsoberfläche des Luftfahrzeuges enthalten,
- Eingeben der digitalen Bilddaten in ein maschinelles Lernsystem (122) der Detektionsvorrichtung (100) als Eingabedaten, welches mittels mindestens eines maschinell angelernten Entscheidungsalgorithmus eine Korrelation zwischen digitalen Bilddaten als Eingabedaten und verschiedenen Vereisungsarten einer Luftfahrzeugvereisung (12) als Ausgabedaten gelernt hat, um Ausgabedaten zu erhalten, und
- Detektieren einer Luftfahrzeugvereisung (12) in Abhängigkeit von den erhaltenen Ausgabedaten und, sofern eine Luftfahrzeugvereisung (12) detektiert wurde, Klassifizieren der Luftfahrzeugvereisung (12) hinsichtlich mindestens einer Vereisungsart in Abhängigkeit von den erhaltenen Ausgabedaten.

2. Verfahren nach Anspruch 1, **dadurch gekennzeichnet, dass** die Vereisungsarten Klareis, Raufreifeis, Mischeis, Tröpfcheneis (SLD), Rücklaufeis und/oder Zwischenzykluseis sind.

3. Verfahren nach Anspruch 1 oder 2, **gekennzeichnet durch**
- Aufnehmen von zumindest dem Teil der äußeren Strömungsoberfläche des Luftfahrzeuges mittels mindestens des optischen Bildsensors der Detektionsvorrichtung (100) mehrfach und zeitlich nacheinander und Generieren von mehreren, zeitlich nacheinander liegenden digitalen Bilddaten, welche einen zeitlichen Verlauf des aufgenommenen Teils der äußeren Strömungsoberfläche des Luftfahrzeuges enthalten,
- Eingeben der mehreren, zeitlich nacheinander liegenden digitalen Bilddaten in das maschinelle Lernsystem (122) der Detektionsvorrichtung (100) als Eingabedaten, welches mittels mindestens eines maschinell angelernten Entscheidungsalgorithmus eine Korrelation zwischen mehreren, zeitlich nacheinander liegenden digitalen Bilddaten als Eingabedaten und verschiedenen Änderungszuständen einer Luftfahrzeugvereisung (12) als Ausgabedaten gelernt hat, um Ausgabedaten zu erhalten,
- Detektieren eines zeitlichen Verlaufes der Änderung der Luftfahrzeugvereisung (12) in Abhängigkeit von den erhaltenen Ausgabedaten.

4. Verfahren nach einem der vorhergehenden Ansprüche, **dadurch gekennzeichnet, dass** die digitalen Bilddaten in das maschinelles Lernsystem (122) der Detektionsvorrichtung (100) als Eingabedaten eingegeben werden, wobei mittels mindestens eines maschinell angelernten Entscheidungsalgorithmus eine Korrelation zwischen digitalen Bilddaten als Eingabedaten und einer Vereisungsfläche der Luftfahrzeugvereisung (12) gelernt hat, wobei ein Maß für die Vereisungsfläche der Luftfahrzeugvereisung (12) in Abhängigkeit von den erhaltenen Ausgabedaten ermittelt wird.

5. Verfahren nach einem der vorhergehenden Ansprüche, **dadurch gekennzeichnet, dass** die digitalen Bilddaten in das maschinelles Lernsystem (122) der Detektionsvorrichtung (100) als Eingabedaten eingegeben werden, wobei mittels mindestens eines maschinell angelernten Entscheidungsalgorithmus eine Korrelation zwischen digitalen Bilddaten als Eingabedaten und Enteisungsmaßnahmen an einer äußeren Strömungsoberfläche eines Luftfahrzeuges gelernt hat, wobei in Abhängigkeit von den erhaltenen Ausgabedaten bestimmt wird, ob Enteisungsmaßnahmen durchgeführt werden oder nicht.

6. Verfahren nach einem der vorhergehenden Ansprüche, **dadurch gekennzeichnet, dass** die aus dem Entscheidungsalgorithmus erhaltenen Ausgabedaten und/oder die daraus abgeleiteten Informationen auf einer Anzeigevorrichtung angezeigt werden.

7. Detektionsvorrichtung (100) zur Detektion einer Luftfahrzeugvereisung (12) eines Luftfahrzeuges eingerichtet zur Durchführung des Verfahrens einem der vorhergehenden Ansprüche.

8. Luftfahrzeug mit einer Detektionsvorrichtung (100) nach Anspruch 7.
